# EUROPEAN PATENT APPLICATION

(11) **EP 4 295 988 A1**
(43) Date of publication of application: **27.12.2023**
(21) Application number: 21926676.4
(22) Date of filing: 21.09.2021
(51) Int. Cl.: B23K 26/082, G05B 11/06, G05B 11/36, G05D 3/12, B23K 26/08, G05B 19/19, G05B 19/404

(54) **CONTROL SYSTEM AND CONTROL METHOD**

(30) Priority: 19.02.2021 JP 2021025596
(71) Applicant: OMRON Corporation, Kyoto-shi, Kyoto 600-8530 (JP)
(72) Inventor: YAMAMOTO, Eiji, Kyoto-shi, Kyoto 600-8530 (JP); KOJIMA, Toshiyuki, Kyoto-shi, Kyoto 600-8530 (JP); YASUI, Yuto, Kyoto-shi, Kyoto 600-8530 (JP)
(74) Representative: Mewburn Ellis LLP
(86) International application number: PCT/JP2021/034474
(87) International publication number: WO 2022/176247

(57) **Abstract**

Feedback is provided, based on an actual drive amount of an actuator, to a command to a subsequent actuator. A control system includes a memory configured to store a program configured to generate a command related to a working position, a controller configured to execute the program, a first output unit configured to output a drive signal to a first drive portion, a second output unit configured to output another drive signal to a second drive portion, and a measurement unit configured to measure a drive amount of the first drive portion. The controller is configured to extract a low-frequency component included in the command, transmit the low-frequency component to the first output unit, correct a high-frequency component included in the command based on a signal indicating the drive amount of the first drive portion, and transmit the high-frequency component to the second drive portion.

## Description

### TECHNICAL FIELD

The present disclosure relates to a control system, and more specifically, to a feedback technique for a command of the control system.

### BACKGROUND ART

In a computer numerical control (CNC) processing machine such as a laser processing machine or a router, an inspection machine, or any other apparatus, there is a need for a technique for controlling a plurality of actuators to execute an operation instruction.

Regarding the control of actuators, for example, Japanese Patent Laying-Open No. 2000-078875 (PTL 1) discloses a servo control apparatus. The servo control apparatus is an apparatus in which "a command unit configured to issue a command signal to a control target, a phase detection unit configured to obtain phase information related to a motion state of the control target, and a phase comparison unit configured to obtain a phase difference signal by performing phase comparison between signals by both units are provided; moreover, in a learning mode of learning and storing pattern information of a ripple component caused by an accuracy error of a phase detector, a comb filter is connected in series to the control target, and correction information of a phase error obtained when a ripple component of comb filter output disappears under a constant speed control command is stored in a storage unit in synchronization with a signal from the phase detection unit; and in an actual operation mode, the comb filter is removed, the correction information is read from the storage unit in synchronization with the signal from the phase detection unit, and an output signal of the phase comparison section or a phase detection signal by the phase detection unit is corrected based on the information". (see [ABSTRACT]).

### CITATION LIST

### PATENT LITERATURE

PTL 1: Japanese Patent Laying-Open No. 2000-078875

### SUMMARY OF INVENTION

### TECHNICAL PROBLEM

According to the technique disclosed in PTL 1, it may not be possible to provide, based on an actual drive amount of an actuator, feedback to a command to a subsequent actuator. Therefore, there is a need for a technique for providing, based on an actual drive amount of an actuator, feedback to a command to a subsequent actuator.

The present disclosure has been made in view of the above background, and an object in one aspect is to provide a technique for providing, based on an actual drive amount of an actuator, feedback to a command to a subsequent actuator.

### SOLUTION TO PROBLEM

According to an example of the present disclosure, a control system is provided. The control system comprising: a memory configured to store a program configured to generate a command related to a working position; a controller configured to execute the program; a first output unit configured to output a drive signal to a first drive portion; a second output unit configured to output another drive signal to a second drive portion; and a measurement unit configured to measure a drive amount of the first drive portion. The controller is configured to perform: extracting a low-frequency component included in the command; transmitting the low-frequency component to the first output unit; correcting a high-frequency component included in the command based on a signal indicating the drive amount of the first drive portion; and transmitting the high-frequency component to the second drive portion.

According to this disclosure, it is possible to correct the high-frequency component included in the command based on the signal indicating the drive amount of the first drive portion.

In the above disclosure, the control system further comprising: the first drive portion; and the second drive portion.

According to this disclosure, it is possible to drive the first drive portion based on the low-frequency component included in the command, and it is possible to drive the second drive portion based on the high-frequency component included in the command.

In the above disclosure, the correcting the high-frequency component included in the command includes: adding a position deviation of the first drive portion to the low-frequency component based on the signal; and subtracting the low-frequency component after adding processing from the command.

According to this disclosure, it is possible to correct the high-frequency component based on the position deviation of the first drive portion.

In the above disclosure, the controller is further configured to adjust the position deviation by performing proportional-integral-differential (PID) control.

According to this disclosure, it is possible to prevent excessive correction of the high-frequency component.

In the above disclosure, the controller is further configured to limit the position deviation.

According to this disclosure, it is possible to prevent excessive correction of the high-frequency component.

In the above disclosure, the controller is further configured to change a separation proportion between the low-frequency component and the high-frequency component based on the position deviation.

According to this disclosure, it is possible to adjust the separation proportion between the low-frequency component and the high-frequency component based on the position deviation.

In the above disclosure, the changing the separation proportion between the low-frequency component and the high-frequency component based on the position deviation includes: repeating the changing the separation proportion; comparing a plurality of position deviations each occurring at a corresponding one of a plurality of separation proportions; and; and selecting a separation proportion at which the position deviation is the smallest.

According to this disclosure, it is possible to select the separation proportion, between the low-frequency component and the high-frequency component, at which the position deviation is the smallest.

According to another example of the present disclosure, a control method is provided. The control method comprising: generating a command related to a working position; extracting a low-frequency component included in the command; driving a first one of the drive portions of the apparatus based on the low-frequency component; correcting a high-frequency component included in the command based on a signal indicating a drive amount of the first drive portion; and driving a second one of the drive portions of the apparatus based on the high-frequency component.

According to this disclosure, it is possible to correct the high-frequency component included in the command based on the signal indicating the drive amount of the first drive portion.

In the above disclosure, the correcting the high-frequency component included in the command includes: adding a position deviation of the first drive portion to the low-frequency component based on the signal; and subtracting the low-frequency component after adding processing from the command.

According to this disclosure, it is possible to correct the high-frequency component based on the position deviation of the first drive portion.

In the above disclosure, the control method further comprising adjusting the position deviation by performing PID control.

According to this disclosure, it is possible to prevent excessive correction of the high-frequency component.

In the above disclosure, the control method further comprising limiting the position deviation.

According to this disclosure, it is possible to prevent excessive correction of the high-frequency component.

In the above disclosure, the control method further comprising changing a separation proportion between the low-frequency component and the high-frequency component based on the position deviation.

According to this disclosure, it is possible to adjust the separation proportion between the low-frequency component and the high-frequency component based on the position deviation.

In the above disclosure, the changing the separation proportion between the low-frequency component and the high-frequency component based on the position deviation includes: repeating the changing the separation proportion; comparing a plurality of position deviations each occurring at a corresponding one of a plurality of separation proportions; and selecting a separation proportion at which the position deviation is the smallest.

According to this disclosure, it is possible to select the separation proportion, between the low-frequency component and the high-frequency component, at which the position deviation is the smallest.

### ADVANTAGEOUS EFFECTS OF INVENTION

According to an embodiment, it is possible to provide, based on an actual drive amount of an actuator, feedback to a command to a subsequent actuator.

The above and other objects, features, aspects and advantages of the present disclosure will become apparent from the following detailed description of the present disclosure to be understood in conjunction with the accompanying drawings.

### BRIEF DESCRIPTION OF DRAWINGS

Fig. 1 is a schematic diagram illustrating an exemplary configuration of a control system 1 according to an embodiment.
Fig. 2 is a schematic diagram illustrating an exemplary configuration of main hardware of control system 1 according to the embodiment.
Fig. 3 is a first schematic diagram illustrating an exemplary configuration of main software of control system 1 according to the embodiment.
Fig. 4 is a schematic diagram illustrating an exemplary configuration in the vicinity of an XY stage position error detector 360 of control system 1 according to the embodiment.
Fig. 5 is a second schematic diagram illustrating an exemplary configuration of main software of control system 1 according to the embodiment.
Fig. 6 is a schematic diagram illustrating an exemplary configuration of a control system 6 according to the embodiment.
Fig. 7 is a schematic diagram illustrating an exemplary configuration of main software of control system 6 according to the embodiment.

### DESCRIPTION OF EMBODIMENTS

Hereinafter, an embodiment of the technical idea according to the present disclosure will be described with reference to the drawings. In the following description, the same components are denoted by the same reference signs. Their names and functions are also the same. Therefore, detailed description thereof will not be repeated.

### <A. Application Example>

First, an example of a situation to which the present invention is applied will be described.

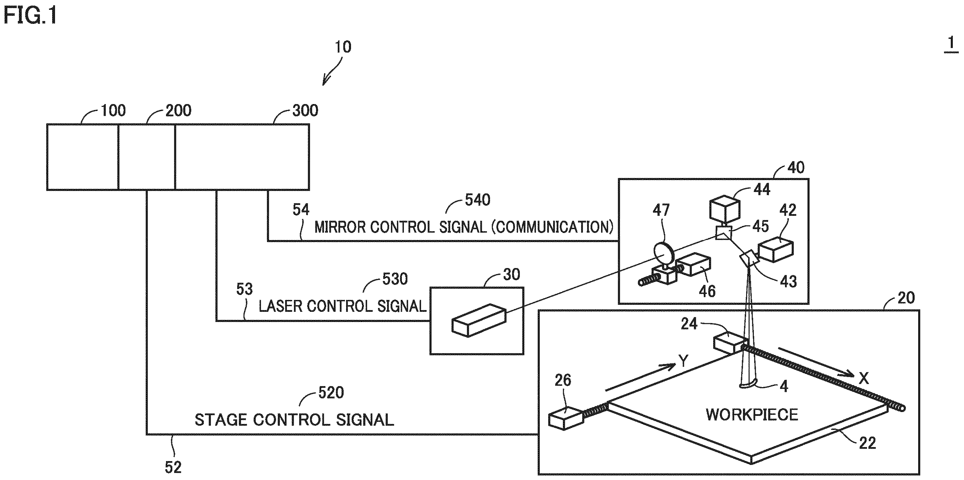

Fig. 1 is a schematic diagram illustrating an exemplary configuration of a control system 1 according to the present embodiment. Fig. 1 illustrates an example of a laser processing system as a typical example, but an application to which the present invention is applied is not subjected to any limitation. In one aspect, the application to which the present invention is applied may include any application such as a CNC processing machine, a three-dimensional (3D) printer, a picking apparatus, and an inspection apparatus. Further, control system 1 may be implemented as a single device or a combination of a plurality of devices, or may be one or a plurality of devices for cooperating with another device.

Control system 1 performs laser processing such as drilling, cutting, and marking on a workpiece 4 placed on an XY stage 20. More specifically, control system 1 includes a control device 10, XY stage 20, a laser 30, and a galvano-mirror 40.

The laser processing on workpiece 4 is performed through combining adjustment of a workpiece position made by XY stage 20 and adjustment, made by galvano-mirror 40, of an irradiation position of laser light generated from laser 30. The adjustment of the position of workpiece 4 made by XY stage 20 generates a relatively larger displacement amount and requires a relatively longer response time. In contrast, the adjustment of the irradiation position made by galvano-mirror 40 generates a relatively smaller displacement amount and requires a relatively shorter response time.

Control device 10 includes a main controller 100, an axis interface unit 200, and a laser controller 300.

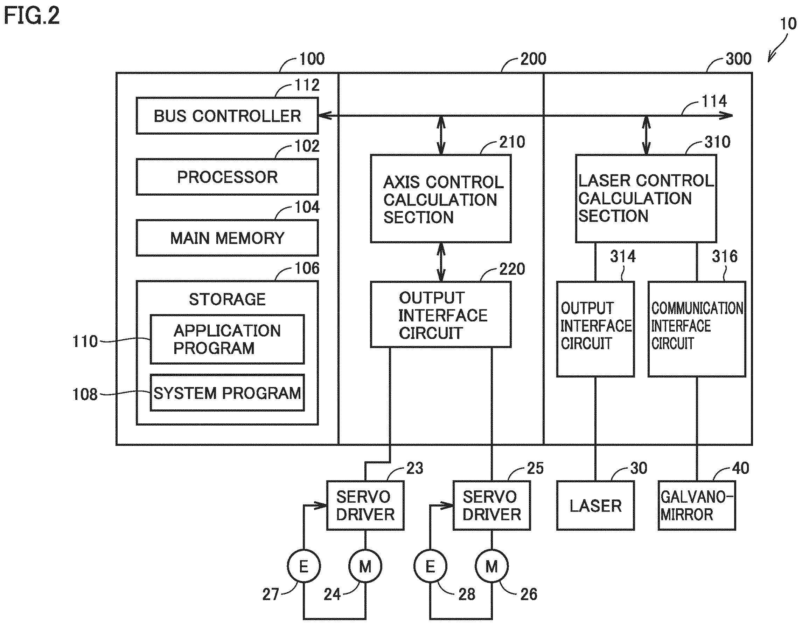

Main controller 100 corresponds to a calculation unit that executes an application program 110 (see Fig. 2). Application program 110 is created as appropriate in accordance with a mechanism to be controlled, workpiece 4, and the like. An execution result obtained by main controller 100 executing application program 110 is used to generate control signals in axis interface unit 200 and laser controller 300.

Axis interface unit 200 is connected to XY stage 20 via a control line 52, and outputs a stage control signal 520 for driving XY stage 20. XY stage 20 includes a plate 22 on which workpiece 4 is placed, and a servo motor 24 and a servo motor 26 that drive plate 22. In the example illustrated in Fig. 1, servo motor 24 displaces plate 22 in an X-axis direction, and servo motor 26 displaces plate 22 in a Y-axis direction. Stage control signal 520 from axis interface unit 200 is provided to each of a servo driver 23 and a servo driver 25 (see Fig. 2), which respectively drive servo motor 24 and servo motor 26. In one aspect, axis interface unit 200 may control any number of one or more servo motors.

Laser controller 300, which is a type of communication unit, is connected to laser 30 via a control line 53, and outputs, to laser 30, a laser control signal 530 instructing laser 30 to turn on/off Laser controller 300 is connected to galvano-mirror 40 via a communication line 54, and outputs, to galvano-mirror 40, a mirror control signal 540 indicating an optical path. Galvano-mirror 40 includes an X-axis scanning mirror 43, a Y-axis scanning mirror 45, and a lens 47. The irradiation light emitted from laser 30 propagates through lens 47, and to Y-axis scanning mirror 45 and X-axis scanning mirror 43, in this order, and is projected onto XY stage 20.

Each degree of a reflection surface of X-axis scanning mirror 43 is adjusted by an X-axis scanning motor 42, and each degree of a reflection surface of Y-axis scanning mirror 45 is adjusted by a Y-axis scanning motor 44. A relative distance between lens 47 and laser 30 is adjusted by a Z-axis scanning motor 46.

Here, each of stage control signal 520 and laser control signal 530 is specifically an electrical signal such as a pulse signal, and each of XY stage 20 and laser 30 receiving the signals operates in accordance with a level (potential or voltage) or level change of the pulse signal. On the other hand, mirror control signal 540 is a communication signal, and mirror control signal 540 is specifically a signal obtained by modulating certain data.

Control system 1 according to the present embodiment operates XY stage 20, which is a high load, by using servo motors 24, 26. Thus, when control system 1 operates XY stage 20, an actual processing position of a workpiece cannot follow a command from main controller 100, and a position deviation (following error) may occur.

As described above, by exemplifying a case in which control system 1 is a laser processing machine, the position changed by the driving of each motor (a working position of an apparatus such as a laser processing machine) has been described as a processing position of a workpiece. However, this is an example. As another example, when an application to which the present invention is applied is an inspection apparatus, the position changed by the driving of each motor is an inspection position of a workpiece. When an application to which the technical idea disclosed herein is applied is a picking apparatus, the position changed by the driving of each motor is a holding position of a workpiece. In addition, when an application to which the technical idea is applied is a 3D printer, the position changed by the driving of each motor is an object-forming position.

The command is output as the execution result obtained by main controller 100 executing application program 110. The command is, as an example, a movement instruction, a position instruction, or the like for a processing position of a workpiece, or the like.

On the other hand, when control system 1 executes the command from main controller 100 (when the processing position is caused to move), only for angles of X-axis scanning mirror 43 and Y-axis scanning mirror 45, a load of each of X-axis scanning motor 42 and Y-axis scanning motor 44 is low. Thus, a position deviation hardly occurs.

Therefore, control system 1 improves its position control accuracy by correcting a motion component on a side of laser 30 based on a position deviation (delay) occurring due to the driving of XY stage 20 driven at a low speed and with a high load on the motors. In this manner, control system 1 can correct the position deviation of XY stage 20 by using each of X-axis scanning motor 42 and Y-axis scanning motor 44 with a low load. As a result, a delay in motion of each motor with respect to a command value is reduced, and the position control accuracy of control system 1 can be easily and effectively improved.

### <B. Exemplary Configuration of Hardware of Control System 1>

Next, an exemplary configuration of hardware of control system 1 according to the present embodiment will be described.

Fig. 2 is a schematic diagram illustrating an exemplary configuration of main hardware of control system 1 according to the present embodiment. As described above, control device 10 includes main controller 100, axis interface unit 200, and laser controller 300.

Main controller 100 includes a processor 102, a main memory 104, a storage 106, and a bus controller 112, as main components.

Storage 106 includes a solid state disk (SSD), a flash memory, or the like. As an example, storage 106 stores a system program 108 for providing a basic program execution environment and application program 110 created as appropriate in accordance with workpiece 4.

Processor 102 typically includes a central processing unit (CPU), a micro-processing unit (MPU), or the like. Processor 102 reads system program 108 and application program 110 stored in storage 106, develops system program 108 and application program 110 in main memory 104, and executes system program 108 and application program 110, thereby implementing overall control of control system 1.

Main controller 100 is electrically connected to axis interface unit 200 and laser controller 300 via an internal bus 114. Bus controller 112 mediates data communication via internal bus 114.

Although an exemplary configuration has been described in which necessary processing is provided by processor 102 executing the programs, part or all of the processing may be implemented by using a dedicated hardware circuit (for example, an application specific integrated circuit (ASIC), a field-programmable gate array (FPGA), or the like.).

Axis interface unit 200 generates and outputs stage control signal 520 to be provided to each of servo driver 23 and servo driver 25. More specifically, axis interface unit 200 includes an axis control calculation unit 210 and an output interface circuit 220.

Axis control calculation unit 210 generates a command to be provided to each of servo driver 23 and servo driver 25 in accordance with a calculation value (command value) calculated by main controller 100 executing application program 110. Axis control calculation unit 210 is implemented by, for example, a calculation circuit configured using a processor, an ASIC, an FPGA, or a combination thereof.

Output interface circuit 220 corresponds to a signal output unit that outputs stage control signal 520 (first control signal) in accordance with the execution result of application program 110. More specifically, output interface circuit 220 generates stage control signal 520 to be provided to each of servo driver 23 and servo driver 25 in accordance with the command generated by axis control calculation unit 210. As stage control signal 520, a signal obtained by modulating information such as a displacement amount, a speed, and an angular velocity in each control period using pulse width modulation (PWM) may be used. That is, output interface circuit 220 may modulate the information to be transmitted by using PWM to generate stage control signal 520. Alternatively, a signal obtained by modulating the information such as a displacement amount, a speed, and an angular velocity as the number of pulses may be used. In one aspect, axis interface unit 200 may control any number of one or more servo motors. In this case, output interface circuit 220 may be connected to three or more servo drivers.

Note that axis control calculation unit 210 and output interface circuit 220 can be implemented by a single ASIC or FPGA.

The command is output as the execution result obtained by main controller 100 executing application program 110. The command is, as an example, a movement instruction for moving a processing position of a workpiece, a position instruction for indicating the next processing position, or the like. In one aspect, the command may include information on a movement speed or acceleration of a processing position of a workpiece. Actual movement of a processing position of a workpiece is implemented by the driving of each servo motor and the adjustment of the angle of each mirror.

An encoder 27 is provided in the vicinity of servo motor 24, and an encoder 28 is provided in the vicinity of servo motor 26. As an example, each of encoders 27, 28 may be a mechanical encoder, an optical encoder, a magnetic encoder, or an electromagnetic induction encoder. In one aspect, each servo motor and each encode may be integrated, or may be separate devices.

Encoder 27 outputs, to servo driver 23, a signal indicating rotational speed of a shaft of servo motor 24 or a machine component that transmits rotation of servo motor 24. Servo driver 23 outputs the signal indicating rotational speed to axis control calculation unit 210 or processor 102. In one aspect, encoder 27 may directly output the signal indicating rotational speed to axis control calculation unit 210 or processor 102.

Encoder 28 outputs, to servo driver 25, a signal indicating rotational speed of a shaft of servo motor 26 or a machine component that transmits rotation of servo motor 26. Servo driver 25 outputs the signal indicating rotational speed to axis control calculation unit 210 or processor 102. In one aspect, encoder 28 may directly output the signal indicating rotational speed to axis control calculation unit 210 or processor 102.

When axis control calculation unit 210 acquires the signal indicating rotational speed of each servo motor, axis control calculation unit 210 calculates an actual processing position of a workpiece based on the signal indicating rotational speed of each servo motor, and outputs the actual processing position of the workpiece to processor 102. When processor 102 acquires the signal indicating rotational speed of each servo motor, processor 102 calculates the actual processing position of the workpiece based on the signal indicating rotational speed of each servo motor.

Processor 102 corrects a command value to be output to a laser control calculation unit 310 based on the actual processing position of the workpiece. This allows the angles of X-axis scanning mirror 43 and Y-axis scanning mirror 45 to be adjusted, whereby control system 1 can correct the position deviation of XY stage 20.

Laser controller 300 generates and outputs laser control signal 530 to be provided to laser 30 and mirror control signal 540 to be provided to galvano-mirror 40. More specifically, laser controller 300 includes laser control calculation unit 310, an output interface circuit 314, and a communication interface circuit 316.

Laser control calculation unit 310 generates a command to be provided to each of laser 30 and galvano-mirror 40 in accordance with a calculation value (command value) calculated by main controller 100 executing application program 110. Laser control calculation unit 310 is implemented by, for example, a calculation circuit configured using a processor, an ASIC, an FPGA, a combination thereof, or the like.

Output interface circuit 314 generates laser control signal 530 to be provided to laser 30 in accordance with the command generated by laser control calculation unit 310. As laser control signal 530, a signal with two levels of on/off may be used.

Communication interface circuit 316 corresponds to a communication unit that transmits mirror control signal 540 (second control signal) by using any communication method in which a clock signal is directly or indirectly used, in accordance with the execution result of application program 110. Specifically, communication interface circuit 316 communicates with galvano-mirror 40, and transmits the command generated by laser control calculation unit 310 to galvano-mirror 40. The communication between communication interface circuit 316 and galvano-mirror 40 can be performed by using, for example, an XY2-100 protocol (a method of specifying a scanning angle range with 16-bit accuracy), an SL2-100 protocol (a method of specifying a scanning angle range with 20-bit accuracy), or the like. Note that the communication protocol in the present embodiment is not limited to such a communication protocol specific to a galvano-mirror or a galvano scanner, and can be applied to any communication method that directly or indirectly uses a clock signal.

Note that laser control calculation unit 310, output interface circuit 314, and communication interface circuit 316 may be implemented by a single ASIC or FPGA, a combination thereof, or the like.

### <C. Exemplary Configuration of Software of Control System 1>

Next, an exemplary configuration of software of control system 1 according to the present embodiment will be described.

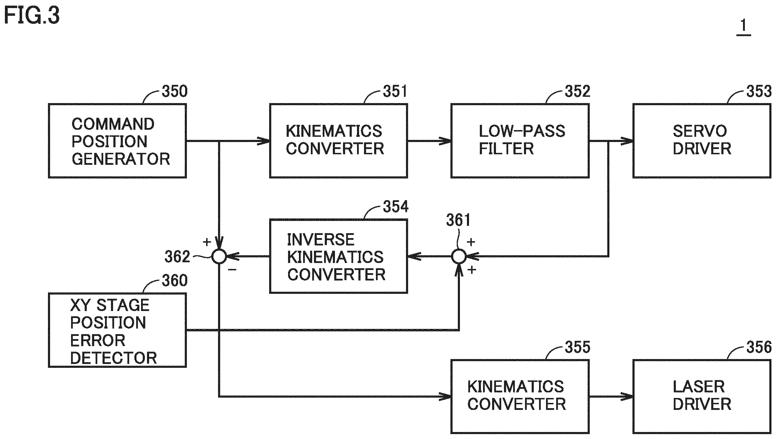

Fig. 3 is a first schematic diagram illustrating an exemplary configuration of main software of control system 1 according to the present embodiment. In one aspect, a part or whole of the configuration illustrated in Fig. 3 may be implemented as software that operates on the hardware illustrated in Fig. 2. In this case, the configuration illustrated in Fig. 3 can operate on processor 102 as a software component. Further, a part of the configuration illustrated in Fig. 3 may operate on axis control calculation unit 210 as a software component.

In another aspect, a part or whole of the configuration illustrated in Fig. 3 may be implemented by, for example, a calculation circuit configured using a processor, an ASIC, an FPGA, or a combination thereof. In this case, processor 102 may include the configuration illustrated in Fig. 3 as a function of hardware. Further, each of axis control calculation unit 210 and laser controller 300 may include a corresponding one of parts of the configuration illustrated in Fig. 3 as a function of hardware.

Control system 1 mainly includes a command position generator 350, a kinematics converter 351, a low-pass filter 352, a servo driver 353, an inverse kinematics converter 354, a kinematics converter 355, a laser driver 356, an XY stage position error detector 360, an adder 361, and a subtractor 362.

Command position generator 350 generates a command value related to a processing position of a workpiece. The command value generated by command position generator 350 includes the processing position of the workpiece, a movement direction of the processing position of the workpiece, a movement speed of the processing position of the workpiece, or the like. The command value generated by command position generator 350 may be expressed as a vector value. In one aspect, the command value generated by command position generator 350 may include acceleration of the processing position of the workpiece.

Control system 1 moves the processing position of the workpiece by driving servo motors 24, 26, X-axis scanning motor 42, and Y-axis scanning motor 44 based on the command value.

Kinematics converter 351 converts the command value (vector value) generated by command position generator 350 into a command value of a physical quantity (a movement amount per unit time of each mechanism, actuator, or the like). Then, kinematics converter 351 outputs the command value of the physical quantity to servo driver 353. The command value of the physical quantity output from kinematics converter 351 includes a high-frequency component and a low-frequency component. The high-frequency component is a component of a large movement amount per unit time. The low-frequency component is a component of a small movement amount per unit time.

Low-pass filter 352 outputs, to servo driver 353, only the low-frequency component in the command value of the physical quantity output from kinematics converter 351. In one aspect, processor 102 may determine a filtering threshold of low-pass filter 352 based on response speeds of servo motors 24, 26. The threshold is a threshold for separating the command value of the physical quantity into the low-frequency component and the high-frequency component. In this case, processor 102 can appropriately change a parameter or a setting of low-pass filter 352.

Servo driver 353 corresponds to each of servo drivers 23, 25. Servo driver 353 acquires the command value of the physical quantity including the low-frequency component output from low-pass filter 352. Further, servo driver 353 outputs a drive signal corresponding to the command value of the physical quantity including the low-frequency component to servo motors 24, 26.

XY stage position error detector 360 detects a difference (position deviation) between an actual processing position of the workpiece and the processing position of the workpiece included in the command value output from command position generator 350. More specifically, XY stage position error detector 360 calculates an actual position of XY stage 20 based on rotational speeds acquired from encoders 27, 28. XY stage position error detector 360 also calculates a target position of XY stage 20 based on the command value of the physical quantity including the low-frequency component output from low-pass filter 352. XY stage position error detector 360 detects presence or absence of a position deviation by calculating a difference (position deviation) between the actual position of XY stage 20 and the target position of XY stage 20. Further, XY stage position error detector 360 outputs the difference (position deviation) to adder 361.

Adder 361 adds the difference (position deviation) input from XY stage position error detector 360 to the command value of the physical quantity including the low-frequency component output from low-pass filter 352. Adder 361 outputs the command value of the physical quantity including the low-frequency component corrected by the difference (position deviation) to inverse kinematics converter 354.

Inverse kinematics converter 354 converts the command value of the physical quantity into a command value of a vector value. More specifically, inverse kinematics converter 354 converts the command value of the physical quantity including the low-frequency component corrected by the difference (position deviation) into a format (vector value) of the command value generated by command position generator 350. Further, inverse kinematics converter 354 outputs the command value after the conversion to subtractor 362.

Subtractor 362 subtracts the command value input from inverse kinematics converter 354 from the command value generated by command position generator 350. Further, subtractor 362 outputs the command value after the subtraction to kinematics converter 355. The command value after the subtraction is a command value of a high-frequency component.

Kinematics converter 355 converts the command value after the subtraction (the command value of the vector value including the high-frequency component) input from subtractor 362 into a command value of a physical quantity (a command value of a physical quantity including a high-frequency component). Further, kinematics converter 355 outputs the command value of the physical quantity to laser driver 356.

Laser driver 356 corresponds to laser control calculation unit 310. Laser driver 356 acquires the command value of the physical quantity including the high-frequency component from kinematics converter 355. Then, laser driver 356 outputs a drive signal corresponding to the command value of the physical quantity including the high-frequency component to each of X-axis scanning motor 42 and Y-axis scanning motor 44.

As described above, control system 1 subtracts the low-frequency component after the correction from the command value (including both the high-frequency component and the low-frequency component) generated by command position generator 350. Control system 1 also outputs the command value after the subtraction to laser driver 356. This allows control system 1 to control X-axis scanning motor 42 and Y-axis scanning motor 44 to correct the position deviation of XY stage 20.

In one aspect, XY stage position error detector 360 may directly output, to inverse kinematics converter 354, a value obtained by adding a difference (position deviation), input from XY stage position error detector 360, to the command value of the physical quantity including the low-frequency component acquired from low-pass filter 352. In this case, control system 1 need not include adder 361.

In another aspect, XY stage position error detector 360 may convert a value obtained by adding the difference (position deviation), input from XY stage position error detector 360, to the command value of the physical quantity including the low-frequency component acquired from low-pass filter 352 into a vector value, and directly output the vector value to subtractor 362. In this case, control system 1 need not include adder 361 and inverse kinematics converter 354.

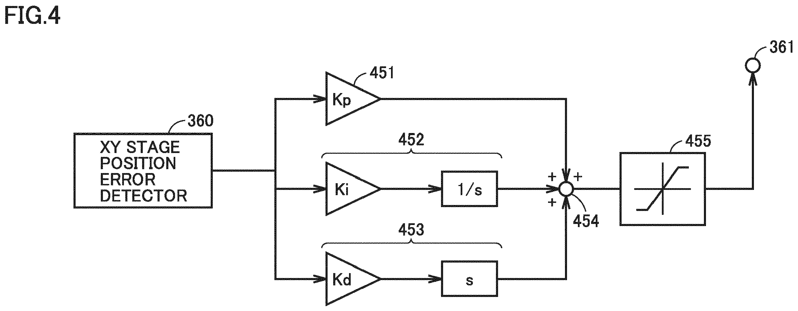

Fig. 4 is a schematic diagram illustrating an exemplary configuration in the vicinity of XY stage position error detector 360 of control system 1 according to the present embodiment. The configuration illustrated in Fig. 4 prevents abrupt correction applied to the command value for laser driver 356 by performing PID control on an output value of XY stage position error detector 360 and setting a limit.

In one aspect, a part or whole of the configuration illustrated in Fig. 4 may be implemented as software that operates on the hardware illustrated in Fig. 2. In this case, the configuration illustrated in Fig. 4 can operate on processor 102 as a software component. Further, a part of the configuration illustrated in Fig. 4 may operate on axis control calculation unit 210 as a software component.

In another aspect, a part or whole of the configuration illustrated in Fig. 4 may be implemented by, for example, a calculation circuit configured using a processor, an ASIC, an FPGA, or a combination thereof. In this case, processor 102 may include the configuration illustrated in Fig. 4 as a function of hardware. Further, each of axis control calculation unit 210 and laser controller 300 may include a corresponding one of parts of the configuration illustrated in Fig. 4 as a function of hardware.

Control system 1 includes a P controller 451, an I controller 452, a K controller 453, an adder 454, and a limiter 455. In one aspect, control system 1 may include only one of a PID controller (P controller 451, I controller 452, and K controller 453) or limiter 455.

P controller 451 performs proportional control on the output (position deviation) of XY stage position error detector 360. I controller 452 performs integral control on the output (position deviation) of XY stage position error detector 360. K controller 453 performs differential control on the output (position deviation) of XY stage position error detector 360.

Adder 454 adds output values of P controller 451, I controller 452, and K controller 453, and outputs the output value after the addition (a position deviation after the PID control) to limiter 455.

Limiter 455 converts the input value (the position deviation after the PID control) acquired from adder 454 into a value less than or equal to a predetermined threshold, based on the input value being greater than or equal to the threshold. Further, limiter 455 outputs the value after the conversion (a position deviation having a value less than or equal to the threshold) to adder 361. When the input value (the position deviation after the PID control) is less than the predetermined threshold, limiter 455 outputs the input value as it is to adder 361.

With the configuration illustrated in Fig. 4, control system 1 does not output an excessively and largely corrected command value to laser driver 356. As a result, control system 1 can prevent X-axis scanning motor 42 and Y-axis scanning motor 44 from performing unexpected motions.

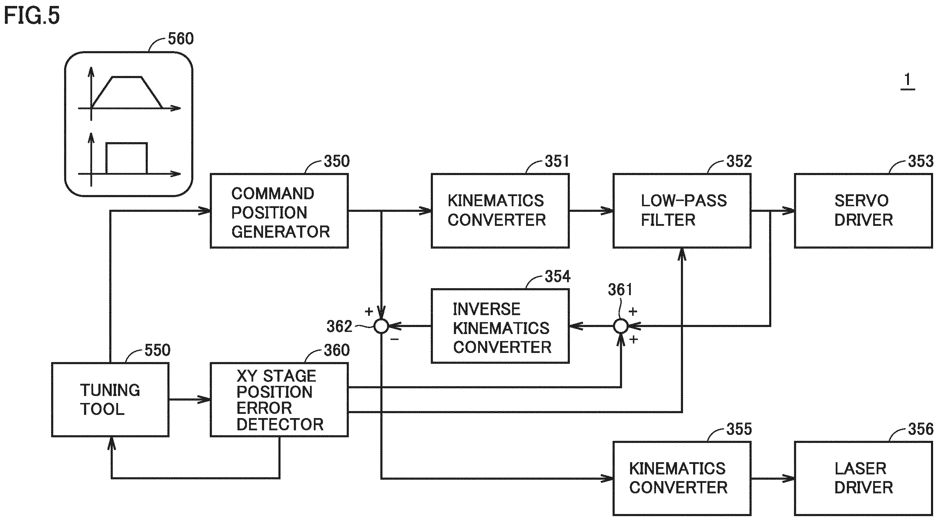

Fig. 5 is a second schematic diagram illustrating an exemplary configuration of main software of control system 1 according to the present embodiment. Unlike the configuration illustrated in Fig. 3, the configuration illustrated in Fig. 5 has a feedback function for low-pass filter 352.

In one aspect, a part or whole of the configuration illustrated in Fig. 5 may be implemented as software that operates on the hardware illustrated in Fig. 2. In this case, the configuration illustrated in Fig. 5 can operate on processor 102 as a software component. Further, a part of the configuration illustrated in Fig. 5 may operate on axis control calculation unit 210 as a software component.

In another aspect, a part or whole of the configuration illustrated in Fig. 5 may be implemented by, for example, a calculation circuit configured using a processor, an ASIC, an FPGA, or a combination thereof. In this case, processor 102 may include the configuration illustrated in Fig. 5 as a function of hardware. Further, each of axis control calculation unit 210 and laser controller 300 may include a corresponding one of parts of the configuration illustrated in Fig. 5 as a function of hardware.

Control system 1 further includes a tuning tool 550 in addition to the configuration illustrated in Fig. 3. Tuning tool 550 tunes the parameter of low-pass filter 352 based on a difference (position deviation) acquired from XY stage position error detector 360.

More specifically, as first processing, tuning tool 550 outputs a command to command position generator 350, and causes command position generator 350 to output a command value for a characteristic operation. Command position generator 350 that has acquired the command outputs a certain command value 560 for the operation including trapezoidal driving, linear driving, or the like.

Next, as second processing, tuning tool 550 acquires the position deviation from XY stage position error detector 360. The position deviation may be either a vector value or a physical quantity.

Next, as third processing, tuning tool 550 outputs a change command for changing the parameter to low-pass filter 352. With the change command, tuning tool 550 causes a separation proportion between the high-frequency component and the low-frequency component of the command value, separated through low-pass filter 352, to change. In one aspect, tuning tool 550 may directly output the change command for changing the parameter to low-pass filter 352. In another aspect, tuning tool 550 may output the change command for changing the parameter to low-pass filter 352 via XY stage position error detector 360.

Tuning tool 550 repeatedly executes the first processing to the third processing. Then, tuning tool 550 compares the position deviations occurring at the respective parameters, and selects a parameter at which the position deviation is the smallest. In this manner, control system 1 can automatically optimize the separation proportion between the high-frequency component and the low-frequency component.

### <D. Another Application Example>

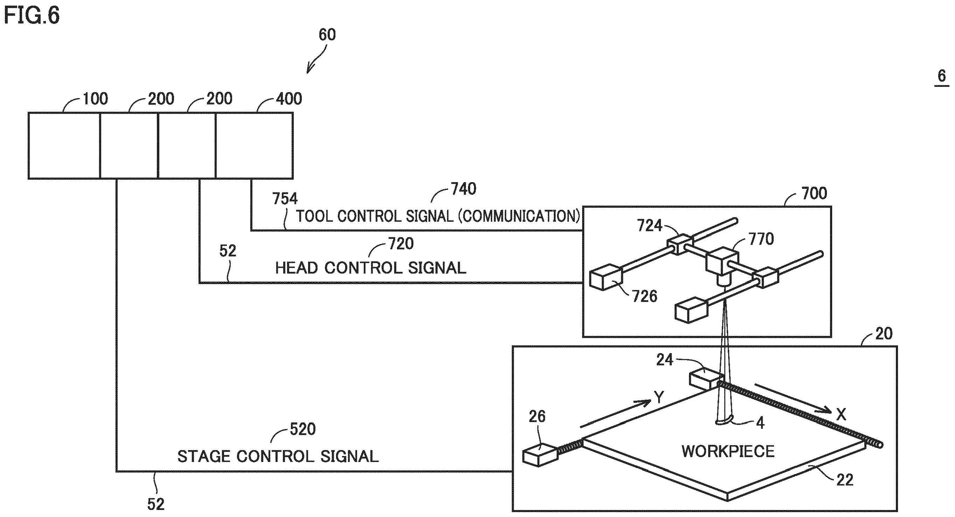

Fig. 6 is a schematic diagram illustrating an exemplary configuration of a control system 6 according to the present embodiment. Unlike the configuration illustrated in Fig. 1, the configuration illustrated in Fig. 6 includes a head 700 including a drive portion with two axes, instead of laser 30 and galvano-mirror 40.

Control system 6 includes a control device 60, XY stage 20, and head 700. Control device 60 includes main controller 100, two axis interface units 200, and a tool controller 400.

The first one of axis interface units 200 is connected to XY stage 20 via control line 52, and outputs stage control signal 520 for driving XY stage 20. The second one of axis interface units 200 is connected to head 700 via another control line 52, and outputs a head control signal 720 for driving head 700. In one aspect, a single axis interface unit 200 may control all the servo motors of XY stage 20 and head 700.

Tool controller 400, which is a type of communication unit, is connected to a tool 770 via a control line 754, and outputs a tool control signal 740 of any format to tool 770. Tool controller 400 includes a tool control calculation unit (not illustrated) instead of laser control calculation unit 310. Tool controller 400 controls any mechanism attached to tool 770 via output interface circuit 314.

Head 700 includes tool 770, a servo motor 724 for driving tool 770 in an X-direction, and a servo motor 726 for driving tool 770 in a Y-direction. Each of servo motors 724, 726 has a load lower than the load of each of servo motors 24, 26, and can drive tool 770 at a high speed.

Tool 770 is provided in head 700, and includes any mechanism. As an example, tool 770 can include any mechanism such as a laser, a router, an inspection camera, a robotic arm, or a nozzle of a 3D printer. Head 700 may include a drive portion with three or more axes in accordance with a mechanism included in tool 770.

Control system 6 improves its position control accuracy by correcting a high-speed motion component of each of servo motors 724, 726 on a side of head 700 based on a position deviation (delay) of XY stage 20 driven at a low speed and with a high load on the motors. This allows control system 1 to correct the position deviation of XY stage 20 by using each of servo motors 724, 726, with a low load, on the side of head 700. As a result, a delay in motion of each motor with respect to the command value is reduced, and the position control accuracy of control system 6 can be easily and effectively improved.

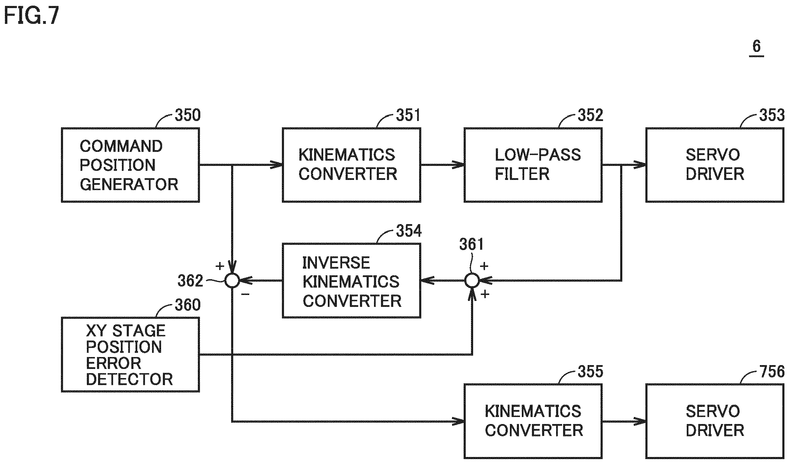

Fig. 7 is a schematic diagram illustrating an exemplary configuration of main software of control system 6 according to the present embodiment. Unlike the configurations illustrated in Figs. 3 and 5, the configuration illustrated in Fig. 7 includes another servo driver, that is, a servo driver 756 instead of laser driver 356.

In one aspect, a part or whole of the configuration illustrated in Fig. 7 may be implemented as software that operates on the hardware illustrated in Fig. 6. In this case, the configuration illustrated in Fig. 7 can operate on processor 102 as a software component. Further, a part of the configuration illustrated in Fig. 7 may operate on axis control calculation unit 210 as a software component.

In another aspect, a part or whole of the configuration illustrated in Fig. 7 may be implemented by, for example, a calculation circuit configured using a processor, an ASIC, an FPGA, or a combination thereof.

In the configuration illustrated in Fig. 7, control system 1 can distribute a command value of a high-frequency component to servo driver 353, and distribute a command value of a low-frequency component to servo driver 756. By allowing control system 1 to be provided with the configuration illustrated in Fig. 7, the technique according to the present embodiment can be applied to any CNC control apparatus including a plurality of servo drivers and servo motors, in addition to a laser processing machine. In one aspect, control system 1 may include any motor such as a stepping motor or a direct current (DC) motor, in addition to the servo motor. In this case, both or one of servo driver 353 and servo driver 756 is/are replaced with a driver/drivers corresponding to a motor/motors to be used.

As described above, control systems 1, 6 according to the present embodiment improve position control accuracy thereof by correcting a high-speed motion component of galvano-mirror 40 or head 700 based on the position deviation (delay) of XY stage 20 driven at a low speed and with a high load on the motors. This allows control systems 1, 6 to correct the position deviation of XY stage 20 by using galvano-mirror 40 or the servo motors on the side of head 700 with low loads. As a result, the delay in motion of each motor with respect to the command value is reduced, and the position control accuracy of control systems 1, 6 can be easily and effectively improved.

### <E. Supplementary Notes>

As described above, the present embodiment includes the following disclosure.

### (Configuration 1)

A control system comprising:
a memory (106) configured to store a program configured to generate a command related to a working position;
a controller (102) configured to execute the program;
a first output unit (220) configured to output a drive signal to a first drive portion (20);
a second output unit (316) configured to output another drive signal to a second drive portion (40); and
a measurement unit configured to measure a drive amount of the first drive portion (20), wherein
the controller (102) is configured to perform:
   extracting a low-frequency component included in the command;
   transmitting the low-frequency component to the first output unit (220);
   correcting a high-frequency component included in the command based on a signal indicating the drive amount of the first drive portion (20); and
   transmitting the high-frequency component to the second drive portion (40).

### (Configuration 2)

The control system according to Configuration 1, further comprising:
the first drive portion (20); and
the second drive portion (40).

### (Configuration 3)

The control system according to Configuration 1 or 2, wherein the correcting the high-frequency component included in the command includes:
adding a position deviation of the first drive portion (20) to the low-frequency component based on the signal; and
subtracting the low-frequency component after adding processing from the command.

### (Configuration 4)

The control system according to Configuration 3, wherein the controller (102) is further configured to adjust the position deviation by performing proportional-integral-differential (PID) control.

### (Configuration 5)

The control system according to Configuration 3 or 4, wherein the controller (102) is further configured to limit the position deviation.

### (Configuration 6)

The control system according to any of Configurations 3 to 5, wherein the controller (102) is further configured to change a separation proportion between the low-frequency component and the high-frequency component based on the position deviation.

### (Configuration 7)

The control system according to Configuration 6, wherein the changing the separation proportion between the low-frequency component and the high-frequency component based on the position deviation includes:
repeating the changing the separation proportion;
comparing a plurality of position deviations each occurring at a corresponding one of a plurality of separation proportions; and
selecting a separation proportion at which the position deviation is the smallest.

### (Configuration 8)

A control method of controlling an apparatus including drive portions, the method comprising:
generating a command related to a working position;
extracting a low-frequency component included in the command;
driving a first one (20) of the drive portions of the apparatus based on the low-frequency component;
correcting a high-frequency component included in the command based on a signal indicating a drive amount of the first drive portion (20); and
driving a second one (40) of the drive portions of the apparatus based on the high-frequency component.

### (Configuration 9)

The control method according to Configuration 8, wherein the correcting the high-frequency component included in the command includes:
adding a position deviation of the first drive portion (20) to the low-frequency component based on the signal; and
subtracting the low-frequency component after adding processing from the command.

### (Configuration 10)

The control method according to Configuration 9, further comprising adjusting the position deviation by performing PID control.

### (Configuration 11)

The control method according to Configuration 9 or 10, further comprising limiting the position deviation.

### (Configuration 12)

The control method according to Configurations 9 to 11, further comprising changing a separation proportion between the low-frequency component and the high-frequency component based on the position deviation.

### (Configuration 13)

The control method according to Configuration 12, wherein the changing the separation proportion between the low-frequency component and the high-frequency component based on the position deviation includes:
repeating the changing the separation proportion;
comparing a plurality of position deviations each occurring at a corresponding one of a plurality of separation proportions; and
selecting a separation proportion at which the position deviation is the smallest.

It should be considered that the embodiment disclosed herein is illustrative in all respects and is not restrictive. The scope of the present disclosure is defined not by the above description but by the claims, and is intended to include all modifications within the meaning and scope equivalent to the claims. Further, the disclosed contents described in the embodiment and the modifications are intended to be implemented separately or in combination wherever possible.

### REFERENCE SIGNS LIST

1, 6: control system, 4: workpiece, 10, 60: control device, 20: stage, 22: plate, 23, 25, 353, 756: servo driver, 24, 26, 724, 726: servo motor, 27, 28: encoder, 30: laser, 40: galvano-mirror, 42, 44, 46: axis scanning motor, 43, 45: axis scanning mirror, 47: lens, 52, 53, 754: control line, 54: communication line, 100: main controller, 102: processor, 104: main memory, 106: storage, 108: system program, 110: application program, 112: bus controller, 114: internal bus, 200: axis interface unit, 210: axis control calculation unit, 220, 314: output interface circuit, 300: laser controller, 310: laser control calculation unit, 316: communication interface circuit, 350: command position generator, 351, 355: kinematics converter, 352: low-pass filter, 354: inverse kinematics converter, 356: laser driver, 360: stage position error detector, 361, 454: adder, 362: subtractor, 400: tool controller, 451, 452, 453: controller, 455: limiter, 520: stage control signal, 530: laser control signal, 540: mirror control signal, 550: tuning tool, 560: command value, 700: head, 720: head control signal, 740: tool control signal, 770: tool

## Claims

1. A control system comprising:
a memory configured to store a program configured to generate a command related to a working position;
a controller configured to execute the program;
a first output unit configured to output a drive signal to a first drive portion;
a second output unit configured to output another drive signal to a second drive portion; and
a measurement unit configured to measure a drive amount of the first drive portion, wherein
the controller is configured to perform:
extracting a low-frequency component included in the command;
transmitting the low-frequency component to the first output unit;
correcting a high-frequency component included in the command based on a signal indicating the drive amount of the first drive portion; and
transmitting the high-frequency component to the second drive portion.

2. The control system according to claim 1, further comprising:
the first drive portion; and
the second drive portion.

3. The control system according to claim 1 or 2, wherein the correcting the high-frequency component included in the command includes:
adding a position deviation of the first drive portion to the low-frequency component based on the signal; and
subtracting the low-frequency component after adding processing from the command.

4. The control system according to claim 3, wherein the controller is further configured to adjust the position deviation by performing proportional-integral-differential (PID) control.

5. The control system according to claim 3 or 4, wherein the controller is further configured to limit the position deviation.

6. The control system according to any of claims 3 to 5, wherein the controller is further configured to change a separation proportion between the low-frequency component and the high-frequency component based on the position deviation.

7. The control system according to claim 6, wherein the changing the separation proportion between the low-frequency component and the high-frequency component based on the position deviation includes:
repeating the changing the separation proportion;
comparing a plurality of position deviations each occurring at a corresponding one of a plurality of separation proportions; and
selecting a separation proportion at which the position deviation is the smallest.

8. A control method of controlling an apparatus including drive portions, the method comprising:
generating a command related to a working position;
extracting a low-frequency component included in the command;
driving a first one of the drive portions of the apparatus based on the low-frequency component;
correcting a high-frequency component included in the command based on a signal indicating a drive amount of the first drive portion; and
driving a second one of the drive portions of the apparatus based on the high-frequency component.

9. The control method according to claim 8, wherein the correcting the high-frequency component included in the command includes:
adding a position deviation of the first drive portion to the low-frequency component based on the signal; and
subtracting the low-frequency component after adding processing from the command.

10. The control method according to claim 9, further comprising adjusting the position deviation by performing PID control.

11. The control method according to claim 9 or 10, further comprising limiting the position deviation.

12. The control method according to any of claims 9 to 11, further comprising changing a separation proportion between the low-frequency component and the high-frequency component based on the position deviation.

13. The control method according to claim 12, wherein the changing the separation proportion between the low-frequency component and the high-frequency component based on the position deviation includes:
repeating the changing the separation proportion;
comparing a plurality of position deviations each occurring at a corresponding one of a plurality of separation proportions; and
selecting a separation proportion at which the position deviation is the smallest.
